# EUROPEAN PATENT SPECIFICATION

(11) **EP 2 724 889 B1**
(45) Date of publication and mention of the grant of the patent: **13.10.2021**
(21) Application number: 13190086.2
(22) Date of filing: 24.10.2013
(51) Int. Cl.: B60Q 1/115, G01C 9/00, G01C 21/16

(54) **Control apparatus for vehicle lamp**
Steuerungsvorrichtung für Fahrzeuglampe
Appareil de commande pour phare de véhicule

(30) Priority: 24.10.2012 JP 2012235053
(43) Date of publication of application: 30.04.2014
(73) Proprietor: Koito Manufacturing Co., Ltd., Tokyo 108-8711 (JP)
(72) Inventor: Kasaba, Yusuke, Shizuoka-shi, Shizuoka (JP); Yamazaki, Masashi, Shizuoka-shi, Shizuoka (JP); Goto, Kazuo, Shizuoka-shi, Shizuoka (JP); Toda, Atsushi, Shizuoka-shi, Shizuoka (JP)
(74) Representative: Grünecker Patent- und Rechtsanwälte PartG mbB

(56) References cited:
- EP-A2- 2 447 127
- DE-A1- 10 044 512
- US-A1- 2003 090 960
- US-A1- 2005 002 195
- US-B1- 6 445 085
- None

## Description

### BACKGROUND

### 1. Field

The invention relates to a control apparatus for a vehicle lamp and more particularly to a control apparatus for a vehicle lamp for use in an automobile or the like.

### 2. Related Art

There has been known auto-leveling control which automatically adjusts an optical axis position of a vehicle headlamp in accordance with an inclination angle of a vehicle to change an illumination direction of the vehicle headlamp. Generally, the auto-leveling control adjusts the optical axis position of the headlamp based on a pitch angle of the vehicle which is derived from an output value of a vehicle height sensor. In contrast, JP 2012-030782 A (corresponding to EP 2 402 212 A2) and JP 2012-030783 A (corresponding to EP 2 399 774 A2) describe control apparatuses for vehicle lamps that perform the auto-leveling control using an inclination sensor such as an acceleration sensor or the like.

EP 2 447 127 A2 discloses a vehicle lamp controller comprising a receiver receiving acceleration values and a transmitter configured to transmit the control signal to an optical axis adjusting portion of a vehicle lamp.

US 6,445,085 B1 discloses an automatic leveling device for a vehicle headlamp wherein an adjustment does not take place while driving on rough road surfaces, turning or slaloming.

### SUMMARY

Where an inclination sensor such as an acceleration sensor, a gyro sensor (an angular velocity sensor, an angular acceleration sensor), or a geomagnetic sensor is used, an auto-leveling system can be offered at lower cost than in the case where the vehicle height sensor is used. Also, a reduction in weight thereof can be achieved. As a result, cost and weight of the vehicle can be achieved. On the other hand, even in the case where the acceleration sensor or the like is used as the inclination sensor, there is a demand for further improving the performance of the auto-leveling control.

As a result of an intensive study to achieve high performance of the auto-leveling control, the inventors has recognized that there is room in a control device for a vehicle lamp according to related art for achieving higher performance of the auto-leveling control.

The invention has been made in view of these circumstances. The invention provides a technique for enhancing the performance of the auto-leveling control for a vehicle lamp.

A control apparatus for a vehicle lamp according to the invention is defined in claim 1. With this control apparatus, it is possible to enhance the performance of the auto-leveling control for the vehicle lamp.

Also, the controller may include a threshold value adjustment section. The threshold value adjustment section adjusts a magnitude of at least one of the turning determination threshold value and the rough road traveling determination threshold value according to the vehicle speed or the acceleration of the vehicle.

Also, the controller may include a threshold value setting section that sets a threshold value for the acceleration in the vehicle longitudinal direction. If the acceleration difference is equal to or less than the first slope traveling determination threshold value and exceeds a second slope traveling determination threshold value which is less than the first slope traveling determination threshold value, the threshold value setting section may set the threshold value for the acceleration in the vehicle longitudinal direction to a first acceleration threshold value and the controller may derive the straight line using detection values absolute values of accelerations, in the vehicle longitudinal direction, of which are equal to or less than the first acceleration threshold value. If the acceleration difference is equal to or less than the second slope traveling determination threshold value, the threshold value setting section may set the threshold value for the acceleration in the vehicle longitudinal direction to a second acceleration threshold value which is larger than the first acceleration threshold value and the controller may derive the straight line using detection values absolute values of accelerations, in the vehicle longitudinal direction, of which is equal to or less than the second acceleration threshold value.

According to the invention, it is possible to provide a technique for enhancing the performance of the auto-leveling control for the vehicle lamp.

### BRIEF DESCRIPTION OF THE DRAWINGS

Fig. 1 is a schematic vertical section view showing a headlamp unit including a vehicle lamp which is a control target of a control apparatus according to a first embodiment;
Fig. 2 is a functional block diagram illustrating an operational interaction among a headlamp unit, a leveling ECU and a vehicle control ECU;
Fig. 3 is a schematic diagram illustrating an acceleration vector occurring in a vehicle and an inclination angle of the vehicle that can be detected by an acceleration sensor;
Figs. 4A and 4B are schematic diagrams illustrating a relationship between a vehicle attitude angle and a direction of a vehicle motion acceleration vector;
Fig. 5 is a graph showing a relationship between acceleration in a vehicle longitudinal direction and acceleration in a vehicle vertical direction;
Figs. 6A and 6B are views illustrating detection values of the acceleration sensor which are detected when a vehicle is in a turning state;
Figs. 7A and 7B are diagrams for explaining the automatic leveling control in a case where detection values to be used to derive a straight line include the detection values, which are obtained when the vehicle is in the turning state;
Fig. 8 is a diagram for explaining detection values of the acceleration sensor which are detected when the vehicle is in a rough road traveling state:
Figs. 9A and 9B are diagrams for explaining the auto-leveling control in a case where the detection values to be used to derive the straight line include the detection value which are obtained when the vehicle is in the rough road traveling state;
Fig. 10 is a diagram for explaining a change in the detected value of the acceleration sensor depending on an inclination angle of a road surface;
Figs. 11A to 11C are diagrams for explaining an offset, which is caused by the inclination angle of the road surface, between detection values of the acceleration sensor and accelerations which are obtained from vehicle speeds;
Figs. 12A and 12B are diagrams for illustrating the auto-leveling control in a case where the detection values to be used to derive the straight line include the detection values, which are obtained when the vehicle is in a slope traveling state; and
Fig. 13 is a flow chart illustrating the auto-leveling control executed by the control apparatus for the vehicle lamp according to the first embodiment.

### DETAILED DESCRIPTION OF THE PREFERRED EMBODIMENTS

Hereinafter, embodiments of the invention will be described with reference to the accompanying drawings. The same or equivalent elements, members, and processes shown in the drawings are denoted by identical reference numerals, and redundant description thereon will be omitted appropriately. In addition, embodiments and modifications are not intended to limit the invention, but to present examples. All features and combinations thereof which are described in the embodiments and the modifications are not always essential to the invention.

### (First Embodiment)

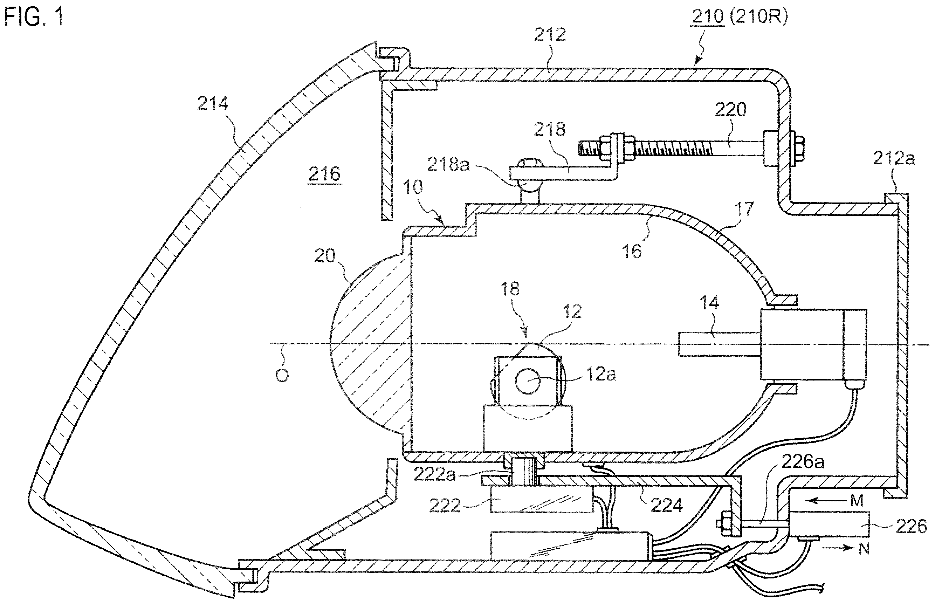

Fig. 1 is a schematic vertical section view of a headlamp unit which is a control target of a control apparatus according to the first embodiment. A vehicle headlamp unit 210 has a structure in which a pair of headlamp units which are formed symmetrically are disposed on right and left sides of a vehicle in a vehicle width direction. Since the headlamp units 210R and 210L disposed on the right and the left sides have substantially the same configuration, the structure of the headlamp unit 210R on the right side will be described below. The headlamp unit 210R includes a lamp body 212 having an opening portion on a front side of the vehicle and a transparent cover 214 that covers the opening portion. The lamp body 212 has a detachable cover 212a on a rear side of the vehicle. A lamp chamber 216 is formed of the lamp body 212 and the transparent cover 214. A lamp unit 10 serving as a vehicle lamp is accommodated in the lamp chamber 216.

In the lamp unit 10, a lamp bracket 218 is formed. The lamp bracket 218 includes a pivot mechanism 218a serving as a swing center, in up, down, right, and left directions, of the lamp unit 10. The lamp bracket 218 screws with an aiming adjustment screw 220 which is supported by the lamp body 212. A rotational shaft 222a of a swivel actuator 222 is fixed to a lower surface of the lamp unit 10. The swivel actuator 222 is fixed to a unit bracket 224. A leveling actuator 226 is connected to the unit bracket 224. The leveling actuator 226 includes, for example, a motor that extends and retracts a rod 226a in an arrow M direction and an arrow N direction. When the rod 226a is extended and retracted in the arrows M and N directions, the lamp unit 10 takes a rearward tilted attitude and a forward tilted attitude. Thereby, it is possible to perform a leveling adjustment to direct a pitch angle of an optical axis O upward or downward.

The lamp unit 10 includes a shade mechanism 18 having a rotational shade 12, a light source 14, a lamp housing 17 that supports a reflector 16 on an inner wall thereof, and a projection lens 20. Examples of the light source 14 include an incandescent lamp, a halogen lamp, a discharge lamp, and an LED. At least a part of the reflector 16 has an elliptically spherical shape. The reflector 16 reflects light emitted from the light source 14. A part of (i) the light from the light source 14 and (ii) the light reflected by the reflector 16 is guided to the projection lens 20 via the rotational shade 12. The rotational shade 12 is a cylindrical member that is rotatable about a rotational shaft 12a. The rotational shade 12 has a notched portion and a plurality of shade plates (not shown). The notched portion or anyone of the shade plates is moved onto the optical axis O, to thereby form a predetermined light distribution pattern. The projection lens 20 is formed of a plano-convex aspheric lens. The projection lens 20 inverts and projects a light source image formed on a rear focal plane thereof onto a virtual vertical screen ahead of the vehicle lamp.

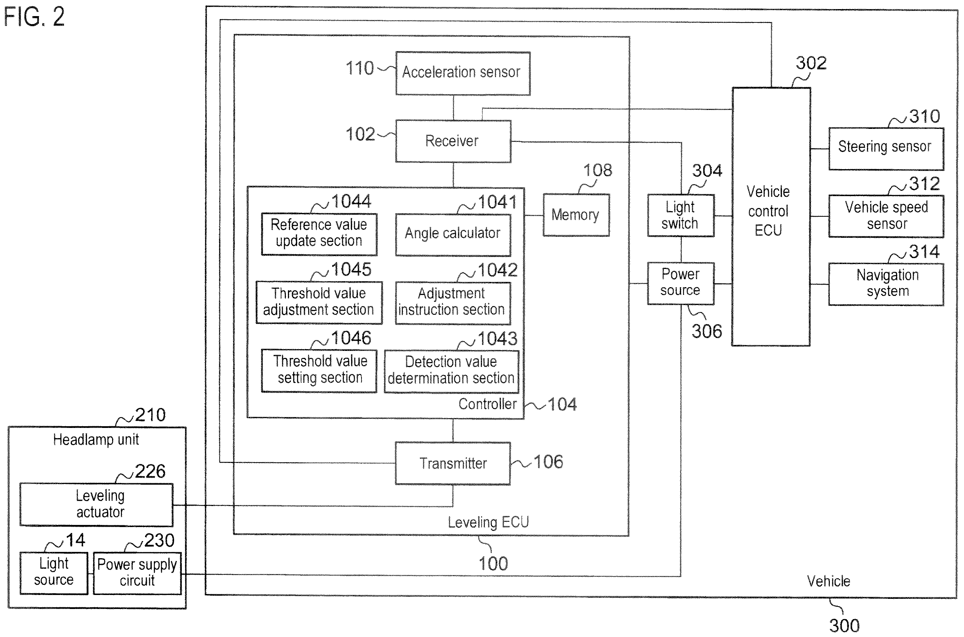

Fig. 2 is a functional block diagram illustrating an operational interaction among the headlamp unit 210, a leveling ECU 100, and a vehicle control ECU 302. It should be noted that in Fig. 2, the headlamp unit 210R and the headlamp unit 210L are collectively referred to as a headlamp unit 210. A hardware configuration of the leveling ECU 100 is implemented by elements and circuits such as a CPU and memories in a computer. A software configuration of the leveling ECU 100 is implemented by a computer program and the like. Fig. 2 shows the functional blocks which are realized by collaboration between the hardware configuration and the software configuration. Therefore, one skilled in the art appreciate that these functional blocks may be realized in various forms by a combination of hardware and software.

The leveling ECU 100 serving as a control apparatus for the vehicle lamp includes a receiver 102, a controller 104, a transmitter 106, a memory 108, and an acceleration sensor 110. The leveling ECU 100 is provided, for example, near the dashboard of the vehicle 300. It should be note that the installation position of the leveling ECU 100 is not particularly limited. The leveling ECU 100 may be provided, for example, within the headlamp unit 210. Further, the acceleration sensor 110 may be provided outside the leveling ECU 100. A light switch 304 and the vehicle control ECU 302 are connected to the leveling ECU 100. The receiver 102 receives signals output from the light switch 304 and the vehicle control ECU 302. Also, the receiver 102 receives a detection value of the acceleration sensor 110.

A steering sensor 310, a vehicle speed sensor 312, a navigation system 314 are connected to the vehicle control ECU 302. Signals output from these sensors are received by the receiver 102 of the leveling ECU 100 via the vehicle control ECU 302. In response to a driver's manipulation, the light switch 304 transmits a signal for instructing turning on/off of the headlamp unit 210 and/or a signal for instructing execution of the auto-leveling control to a power source 306, the vehicle control ECU 302, the leveling ECU 100, and the like.

The signals received by the receiver 102 are transmitted to the controller 104. The controller 104 controls the optical axis O of the lamp unit 10 using the detection value of the acceleration sensor 110. The controller 104 has an angle calculator 1041, an adjustment instruction section 1042, a detection value determination section 1043, a reference value update section 1044, a threshold value adjustment section 1045 and a threshold value setting section 1046. The angle calculator 1041 generates pitch angle information of the vehicle 300 using the detection value of the acceleration sensor 110 and information stored in the memory 108 (as required). The adjustment instruction section 1042 generates an adjustment signal for instructing the optical axis adjustment of the lamp unit 10 using the pitch angle information generated by the angle calculator 1041.

The controller 104 outputs the adjustment signal generated by the adjustment instruction section 1042 to the leveling actuator 226 via the transmitter 106. The leveling actuator 226 is driven based on the received adjustment signal so as to adjust the optical axis O of the lamp unit 10 with respect to the pitch angle direction. Details of the auto-leveling control performed by the controller 104 and the operations of the detection value determination section 1043, the reference value update section 1044, threshold value adjustment section 1045, and threshold value setting section 1046 will be described in detail later.

The vehicle 300 is mounted with the power the power supply 306 for supplying power to the leveling ECU 100, the vehicle control ECU 302, and the headlamp unit 210. When the headlamp unit 210 is instructed to be turned on by the manipulation of the light switch 304, power is supplied from the power supply 306 to the light source 14 via a power supply circuit 230.

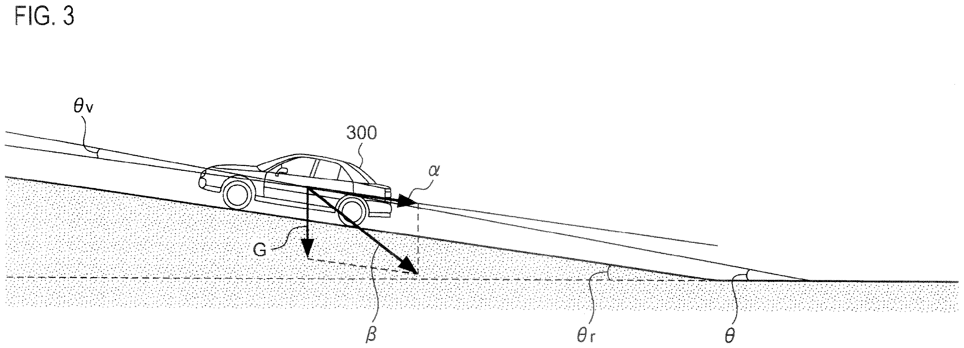

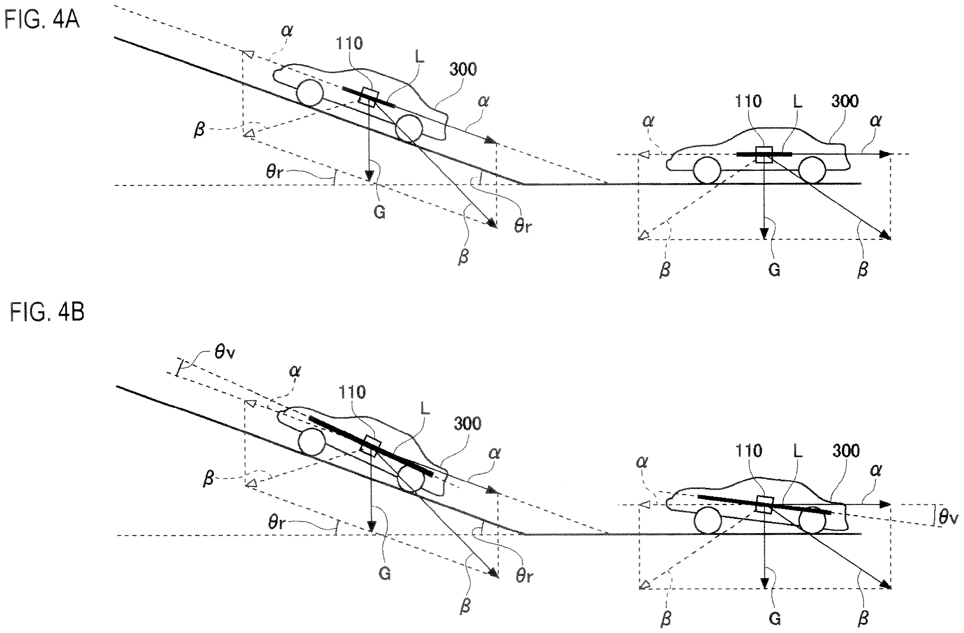

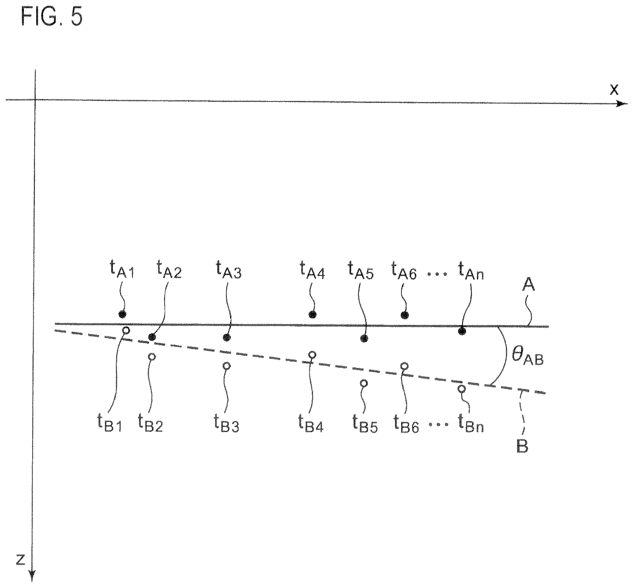

Next, the auto-leveling control performed by the leveling ECU 100 having the configuration described above will be described in detail. Fig. 3 is a schematic diagram illustrating an acceleration vector occurring in the vehicle and an inclination angle of the vehicle that can be detected by the acceleration sensor. Figs. 4A and 4B are schematic diagrams illustrating a relationship between a vehicle attitude angle and a direction of a motion acceleration vector of the vehicle. Fig. 4A shows a state where the vehicle attitude angle θᵥ does not change. Fig. 4B shows a state where the vehicle attitude angle θᵥ has changed. In Figs. 4A and 4B, a motion acceleration vector α and a resultant acceleration vector β, which are generated when the vehicle 300 moves forward, are drawn as solid arrows. Also, a motion acceleration vector α and a resultant acceleration vector β, which are generated when the vehicle 300 moves backward, are drawn as broken-line arrows. Fig. 5 is a graph showing a relationship between acceleration in the longitudinal direction of the vehicle and acceleration in the vertical direction of the vehicle.

For example, when luggage is put in a trunk at a rear portion of the vehicle or a passenger is seated in a rear seat, the vehicle attitude becomes the rearward tilted attitude. Also, when the luggage is picked up or the passenger in the rear seat gets out of the vehicle, the vehicle attitude is tilted forward from the rearward tilted attitude. When the vehicle becomes the rearward tilted attitude or the forward tilted attitude, the illumination direction of the lamp unit 10 changes vertically, and a forward illumination distance is increased or decreased correspondingly. Then, the leveling ECU 100 derives an inclination angle in the pitch direction of the vehicle or a change in the inclination angle from the detection value of the acceleration sensor 110, and sets a pitch angle of the optical axis O (hereinafter, this angle may be referred to as an optical axis angle θ_{O}) to an angle corresponding to the vehicle attitude. By executing the leveling adjustment of the lamp unit 10 based on the vehicle attitude in real time, it is possible to optimally adjust a distance which the forward illumination light reaches even if the vehicle attitude is changed.

The acceleration sensor 110 is a tri-axial acceleration sensor, for example, having an X-axis, a Y-axis, and a Z-axis which are mutually orthogonal to each other. The acceleration sensor 110 is attached to the vehicle 300 in a desirable attitude to detect an acceleration vector occurring in the vehicle 300. The vehicle 300 which is on the move involves the acceleration of gravity and a motion acceleration caused by movement of the vehicle 300. Therefore, the acceleration sensor 110 can detect the resultant acceleration vector β which is obtained by adding a gravitational acceleration vector G and the motion acceleration vector α as shown in Fig. 3. Also, the acceleration sensor 110 can detect the gravitational acceleration vector G during vehicle stop. The acceleration sensor 110 outputs numerical values of the respective axis components of the detected acceleration vector. The controller converts the numerical values of the respective X-axis, Y-axis and Z-axis components into components of a longitudinal axis, a lateral axis and a vertical axis of the vehicle. Thus, the accelerations in the vehicle longitudinal direction, the vehicle lateral direction and the vehicle vertical direction of the vehicle can be derived from the detection value of the acceleration sensor 110.

From the detection value of the acceleration sensor 110 during vehicle stop, an inclination of the vehicle with respect to the gravitational acceleration vector G can be derived. That is, from the detection value of the acceleration sensor 110, it is possible to derive a total angle that is an inclination angle of the vehicle with respect to a horizontal plane. The total angle includes a road surface angle θᵣ which is an inclination angle of a road surface with respect to the horizontal plane and a vehicle attitude angle θᵥ which is an inclination angle of the vehicle with respect to a road surface. It is noted that the road surface angle θᵣ, the vehicle attitude angle θᵥ, and the total angle θ are angles in the pitch direction of the vehicle 300.

An object of the auto-leveling control is to keep the distance, which the forward illumination light reaches, be optimum by absorbing a change in the forward illumination distance of the vehicle lamp which is caused by a change in the inclination angle of the vehicle in the pitch direction. Accordingly, the inclination angle of the vehicle that is required in the auto-leveling control is the vehicle attitude angle θᵥ. That is, it is desired in the auto-leveling control that the position of the optical axis of the lamp unit 10 is adjusted when the vehicle attitude angle θᵥ changes and that the position of the optical axis of the lamp unit 10 is maintained when the road surface angle θᵣ changes. To achieve this, it is necessary to extract information about the vehicle attitude angle θᵥ from the total angle θ, which is obtained by the acceleration sensor 110.

Here, it is assumed that the vehicle 300 moves in parallel with the road surface. Thus, the motion acceleration vector α is a vector parallel to the road surface regardless of the vehicle attitude angle θᵥ. As shown in Fig. 4A, when the vehicle attitude angle θᵥ of the vehicle 300 is 0 degree, since the X-axis of the acceleration sensor 110 (or the longitudinal axis L of the vehicle 300) is parallel to the road surface in theory, the motion acceleration vector α is a vector parallel to the X-axis of the acceleration sensor 110. Therefore, when a magnitude of the motion acceleration vector α changes due to acceleration or deceleration of the vehicle 300, a locus of a tip end of the resultant acceleration vector β, which is detected by the acceleration sensor 110, is a straight line parallel to the X-axis.

On the other hand, as shown in Fig. 4B, when the vehicle attitude angle θᵥ is not 0 degree, since the X-axis of the acceleration sensor 110 deviates obliquely with respect to the road surface, the motion acceleration vector α is a vector extending obliquely with respect to the X-axis of the acceleration sensor 110. Therefore, when the magnitude of the motion acceleration vector α changes due to acceleration or deceleration of the vehicle 300, a locus of the tip end of the resultant acceleration vector β is a straight line that is inclined with respect to the X axis.

Then, the angle calculator 1041 calculates a ratio between a change amount of the acceleration in the vehicle longitudinal direction and a change amount of the acceleration in the vehicle vertical direction at least one of (i) during vehicle acceleration and (ii) during vehicle deceleration. That is, as shown in Fig. 5, the angle calculator 1041 plots the detection values of the acceleration sensor 110, which is obtained in the at least one of during the vehicle acceleration and during the vehicle deceleration, on a coordinate system on which a first axis (X axis) denotes the acceleration in the vehicle longitudinal direction and a second axis (Z axis) denotes the acceleration in the vehicle vertical direction. The plotting of the detected values includes plotting of the acceleration values of a vehicle coordinate system which are obtained from the detection values of the acceleration sensor 110.

Points t_{A1} to t_{An} indicate detection values at time tₗ to time tₙ in the state show in Fig. 4A. Points t_{Bl} to t_{Bn} indicate detected values at the time tₗ to the time tₙ in the state show in Fig. 4B. Then, a straight line is derived from the plurality of plotted points (at least two points), and a gradient of the thus-obtained straight line is calculated as the ratio described above. The angle calculator 1041 obtains linear approximation formulae A and B by applying the least squares method or the moving average method to the plotted points t_{Al} to t_{An} and the plotted points t_{Bl} to t_{Bn} and calculates the gradients of the linear approximation formulae A and B.

When the vehicle attitude angle θᵥ is 0 degree, the linear approximation formula A parallel to the X-axis is obtained from the detection values of the acceleration sensor 110. That is, the gradient of the linear approximation formula A is 0. In contrast, when the vehicle attitude angle θᵥ is not 0 degree, the linear approximation formula B, which is inclined according to the vehicle attitude angle θᵥ, is obtained from the detection values of the acceleration sensor 110. An angle between the linear approximation formula A and the linear approximation formula B (θ_{AB} shown in Fig. 5) is the vehicle attitude angle θᵥ. Therefore, by measuring the ratio between the change amount of the acceleration in the vehicle longitudinal direction and the change amount of the acceleration in the vehicle vertical direction (the gradient of the straight line) during the vehicle acceleration and/or vehicle deceleration or measuring a change of the ratio, the vehicle attitude angle θᵥ or a change of the vehicle attitude angle θᵥ can be obtained from the detection values of the acceleration sensor 110. That is, the vehicle attitude angle θᵥ can be estimated from the gradient of the above described straight line. Then, it is possible to realize the auto-leveling control with high accuracy by utilizing the information about the thus obtained vehicle attitude angle θᵥ.

The vehicle lamp system 200 according to this exemplary embodiment executes the following auto-leveling control using the information about the vehicle attitude angle θᵥ obtained from the gradient of the above described straight line. That is, at first, in a manufacturing plant of a vehicle manufacturer or the like, the vehicle 300 is placed on a horizontal plane to be in a reference state. Then, an initialization signal is transmitted to the leveling ECU 100 by manipulating a switch of an initialization processing apparatus, by means of communication of a CAN (Controller Area Network) system or the like. Upon receipt of the initialization signal, the controller 104 starts an initial aiming adjustment and adjusts the optical axis O of the lamp unit 10 to an initial setting position. Also, the controller 104 stores an output value of the acceleration sensor 110 in the reference state in the memory 108 as a reference value of the road surface angle θᵣ (θᵣ = 0 degree) and a reference value of the vehicle attitude angle θᵥ (θᵥ = 0 degree).

Also, the vehicle 300 travels while being kept in the reference state. Then, the angle calculator 1041 plots the detection values of the acceleration sensor 110 on the coordinate system as described above and obtains a linear approximation formula from this plot. This linear approximation formula is equivalent to the linear approximation formula A in Fig. 5. The controller 104 stores in the memory 108 a gradient of the linear approximation formula as the reference value of the gradient.

In a case where the vehicle 300 is actually used, it is rare that the vehicle attitude angle θᵥ changes during vehicle travel due to increase or decrease of an amount of load or increased or decrease of the number of persons on the vehicle. Therefore, a change in the total angle θ during the vehicle travel may be estimated as the change of the road surface angle θᵣ. Therefore, the adjustment instruction section 1042 avoids the optical axis adjustment with respect to the change in the total angle θ of the vehicle during the vehicle travel. The adjustment instruction section 1042 avoids the optical axis adjustment by avoiding outputting of an adjustment signal for instructing the optical axis adjustment or by generating and outputting a keep signal for instructing to keep the position of the optical axis. The outputting of the adjustment signal may be avoided by not generating the adjustment signal. Also, the adjustment signal may be generated and then the outputting of the generated adjustment signal may be avoided.

Then, at a vehicle stopping moment, the angle calculator 1041 obtains the road surface angle θᵣ by subtracting the reference value of the vehicle attitude angle θᵥ from the current total angle θ (the total angle θ at the vehicle stopping moment). The thus-obtained road surface angle θᵣ is stored in the memory 108 as a new reference value. Thereby, the change in the total angle θ during the vehicle travel, which is estimated as the change in the road surface angle θᵣ, is adopted in the reference value of the road surface angle θᵣ. The angle calculator 1041 may calculate, at the vehicle stopping moment, a difference between the total angles 0 before and after the vehicle travels and then calculate a new reference value of the angle θᵣ by introducing the difference to the reference value of the road surface angle θᵣ.

"During vehicle travel" means a period, for example, from when a detection value of the vehicle speed sensor 312 exceeds 0 to when the detection value of the vehicle speed sensor 312 becomes 0. "At a vehicle stopping moment" means, for example, a time at which an output value of the acceleration sensor 110 is stable after the detection value of the vehicle speed sensor 312 becomes 0. The phrase "a time at which an output value is stable" may be a time at which a change amount of the detection value of the acceleration sensor 110 per unit time becomes smaller than a predetermined value or may be a time at which a predetermined time has passed after the detection value of the vehicle speed sensor 312 becomes 0. The "at the vehicle stopping moment," the "predetermined value," and the "predetermined time" may be appropriately set by means of a designer's experiment or a designer's simulation.

Meanwhile, it is rare during vehicle stop that the vehicle 300 moves and the road surface angle θᵣ changes. Thus, the change of the total angle θ during the vehicle stop may be estimated as the change of the vehicle attitude angle θᵥ. Then, the adjustment instruction section 1042 adjusts the optical axis with respect to the change of the total angle θ during the vehicle stop. More specifically, during the vehicle stop, the angle calculator 1041 obtains the vehicle attitude angle θᵥ by subtracting the reference value of the road surface angle θᵣ from the current total angle 0, which is obtained from the detection values of the acceleration sensor 110. The thus-obtained vehicle attitude angle θᵥ is stored in the memory 108 as a new reference value. The vehicle attitude angle θv is calculated repeatedly, for example, at a predetermined timing. The angle calculator 1041 may calculate a difference between the current total angle θ and a total angle θ which is detected previously and may calculate a new reference value of the vehicle attitude angle θᵥ by introducing the difference in the reference value of the vehicle attitude angle θᵥ.

Then, the adjustment instruction section 1042 generates an adjustment signal for instructing the adjustment of the optical axis using the thus-obtained vehicle attitude angle θᵥ, that is, the updated reference value of the vehicle attitude angle θᵥ. For example, the adjustment instruction section 1042 determines the optical axis angle θ_{O} using a conversion table stored in the memory 108 in advance in which the vehicle attitude angles θᵥ and the optical axis angles θ_{O} are associated with each other, and adjusts the optical axis O so as to be the determined optical axis angle θ_{O}. The "during vehicle stop" means a period, for example, from when the output value of the acceleration sensor 110 becomes stable to when the detection value of the vehicle speed sensor 312 exceeds 0. The "during the vehicle stop" may be appropriately set based on a designer's experiment or a designer's simulation.

When the vehicle 300 is accelerated or decelerated (during vehicle acceleration and/or during vehicle deceleration), for example, at a vehicle starting moment or at a vehicle stopping moment, the angle calculator 1041 records the detection values of the acceleration sensor 110 for a predetermined period. The angle calculator 1041 plots the recorded detection values, for example, with time on a coordinate system in which a first axis denotes acceleration in the vehicle longitudinal direction and a second axis denotes acceleration in the vehicle vertical direction. The angle calculator 1041 calculates a linear approximation formula continuously or every predetermined time. The angle calculator 1041 calculates the vehicle attitude angle θᵥ form a gradient of the obtained linear approximation formula and a gradient reference value stored in the memory 108. For example, the detection value of the acceleration sensor 110 is repeatedly stored in the memory 108 at predetermined time intervals. When the number of the detection values stored in the memory 108 reaches the predetermined number of plots to be used in calculation of a straight line, the angle calculator 1041 calculates the straight line. The detection values of the acceleration sensor 110 are stored in the memory together with information indicating determination results by the detection value determination section 1043 which will be described later.

The adjustment instruction section 1042 corrects the optical axis angle θ_{O} based on the obtained vehicle attitude angle θᵥ. Also, the adjustment instruction section 1042 corrects the reference value of the vehicle attitude angle θᵥ, which is stored in the memory 108. For example, the adjustment instruction section 1042 corrects the optical axis angle θ_{O} so that the optical axis angle θ_{O} corresponds to the vehicle attitude angle θᵥ, which is obtained from the gradient of the linear approximation formula. Also, the reference value of the vehicle attitude angle θᵥ stored in the memory 108 is rewritten with the vehicle attitude angle θᵥ, which is obtained from the gradient of the linear approximation formula.

Thereby, it is possible to prevent an accuracy of the auto-leveling control from being lowered due to an accumulation of detection errors of the acceleration sensor 110 in the reference value of the road surface angle θᵣ and the reference value of the vehicle attitude angle θᵥ, which is caused by repeatedly rewriting the reference value of the road surface angle θᵣ and the reference value of the vehicle attitude angle θᵥ. The controller 104 may record the output values of the acceleration sensor 110 when the vehicle 300 is accelerated or decelerated (during the vehicle acceleration and/or during the vehicle deceleration) in a single run from start of the vehicle 300 to stop of the vehicle 300, calculate the linear approximation formulae at the vehicle stopping moment or the like, and execute the correction process.

The controller 104 may calculate a difference between a gradient of a current straight line and a gradient of a previous straight line, add the difference to the reference value, and execute the correction process using the value which is integrated from the first calculation. Also, when the controller 104 may compare a gradient of an obtained linear approximation formula with a gradient of a linear approximation formula obtained in the previous calculation. When a change is detected in the gradient of the linear approximation formula, the controller 104 may execute the correction process based on the change in the gradient.

For example, it is assumed that the reference value of the vehicle attitude angle θᵥ stored in the memory 108 is p degree and that the value, which is obtained by integrating (adding up) the change(s) in the gradient of the linear approximation formula from the first calculation is q degree. Or, it is assumed that a difference between the reference value of the vehicle attitude angle θᵥ, which is stored at the latest vehicle stopping moment, and the reference value of the vehicle attitude angle θᵥ, which is stored at a vehicle starting moment after the latest vehicle stopping moment, that is, at the current vehicle starting moment, is p degree and that a difference between the gradient of the linear approximation formula, which is calculated at the previous vehicle starting moment, and the gradient of the linear approximation formula, which is calculated at the current vehicle starting moment, is q degree. In this case, the adjustment instruction section 1042 corrects the reference value of the optical axis angle θ_{O} and the reference value of the vehicle attitude angle θᵥ by a difference of (p - q) degrees in the vehicle attitude angle θᵥ.

Also, in the case where a change in the gradient of the linear approximation formula described above is detected, the adjustment instruction section 1042 may cause the optical axis angle θ_{O} to be close to the horizontal direction or an initial setting position and correct the reference value of the vehicle attitude angle θᵥ so as to be close to 0 degree or an initial value.

Also, the leveling ECU 100 according to this embodiment executes the following control to enhance an accuracy of estimation of the vehicle attitude angle θᵥ from the gradient of the linear approximation formula described above. That is, the detection value determination section 1043 of the controller 104 according to this embodiment determines as to whether or not the detection value of the acceleration sensor 110 at a time when the vehicle 300 is in a predetermined traveling state that lowers the accuracy of the estimation of the vehicle attitude angle θᵥ from the gradient of the straight line described above (hereinafter, this detection value may be appropriately referred to as an "error factor detection value") is included in the detection values to be used to derive a straight line.

If the detection value determination section 1043 determines that the error factor detection value is included, the angle calculator 1041 derives a straight line excluding the error factor detection value. Then, the adjustment instruction section 1042 outputs an adjustment signal using a gradient of this straight line. Thereby, the accuracy of the estimation of the vehicle attitude angle θᵥ from the gradient obtained by plotting the detection values is enhanced. Therefore, it is possible to enhance the accuracy of the auto-leveling control, which results in that higher performance of the auto-leveling control can be achieved.

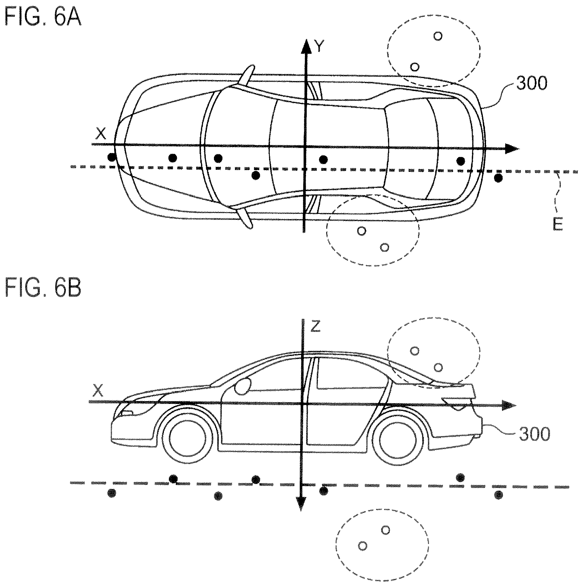

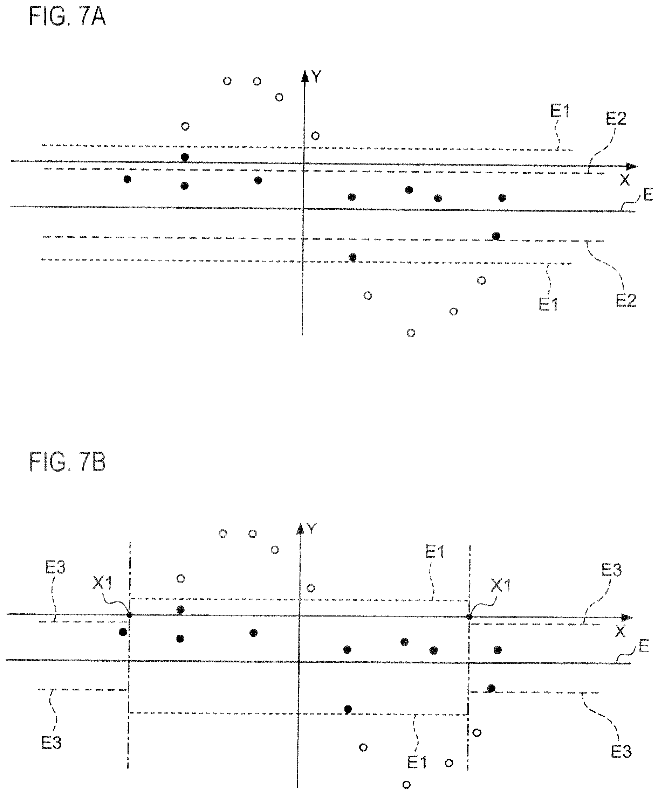

Examples of the predetermined traveling state, which lowers the accuracy of the estimation of the vehicle attitude angle θᵥ, include a predetermined turning state such as a state where the vehicle 300 is traveling on a curved road. Figs. 6A and 6B are views illustrating detection values of the acceleration sensor which are detected when the vehicle is in the turning state. Figs. 7A and 7B are diagrams for explaining the auto-leveling control in the case where the detection values, which are detected when the vehicle is in the turning state, are included in the detection values to be used to derive the straight line. Figs. 6A, 7A and 7B show a relationship between acceleration in the vehicle longitudinal direction and acceleration in the vehicle lateral direction. Fig. 6B shows a relationship between the acceleration in the vehicle longitudinal direction and acceleration in the vehicle vertical direction. In Figs. 6A to 7B, black circles indicate the detection values of the acceleration sensor 110 which are used to derive the linear approximation formula, and white circles indicate detection values of the acceleration sensor 110 which are not used to derive the linear approximation formula.

As shown in Fig. 6A, when the vehicle 300 is in the straight traveling state, detection values (black circles) which are substantially equal in distance from a plane perpendicular to the vehicle lateral axis (Y axis) are obtained. For example, when the vehicle 300 is in the straight traveling state, points obtained by projecting the detection values onto the X-Y plane are substantially equal in distance from the vehicle longitudinal axis (X axis). Also, as shown in Fig. 6B, these detection values are located at a substantially equal distance even from a plane perpendicular to the vehicle vertical axis (the Z axis). For example, points obtained by projecting these detection values onto the Z-X plane are substantially equal in distance from the vehicle longitudinal axis (X axis). In contrast, when the vehicle 300 is in the turning state, like detected values in a region surrounded by dashed lines, the detection values (white circle) are obtained which are far in the lateral axis direction from a group of the detection values obtained in the straight traveling state. These detection values are also far in the vehicle vertical axis from the group of the detection values obtained in the straight traveling state. Therefore, these detection values become the error factor detection values.

Then, as shown in Figs. 7A and 7B, the reference value update section 1044 derives a turning determination reference value E from accelerations, in the lateral direction, of the plurality of detection values. For example, in the initialization process described above, the reference value update section 1044 derives an initial turning determination reference value E (Y = 0) from a plurality of detection values of the acceleration sensor 110 which are obtained when the vehicle 300 is traveling in the reference state. The turning determination reference value E is stored in the memory 108.

Also, in a state where the vehicle 300 is actually used, the detection values of the acceleration sensor 110 are plotted on the coordinate system in which the first axis (X axis) denote the acceleration in the vehicle longitudinal direction and the second axis (Y axis) denote the acceleration in the vehicle lateral direction. Then, the turning determination reference value E is calculated from a group of the obtained detection values by using the moving average method or the least squares method. In the state where the vehicle 300 is actually used, the vehicle 300 is often in the straight traveling state. Therefore, by using a group of the certain number of detection values, the accelerations in the vehicle lateral direction which are obtained when the vehicle 300 is in the straight traveling state, that is, the turning determination reference value E can be obtained. In the case where the least squares method is used as the method for calculating the turning determination reference value E, for example, the turning determination reference value E is set to a Y intercept of a straight line obtained by the least squares method.

Then, if a difference between acceleration, in the vehicle lateral direction, of the detection value of the acceleration sensor 110 and the turning determination reference value E exceeds a first turning determination threshold value E1 (predetermined value), the detection value determination section 1043 determines that the vehicle 300 is in the predetermined turning state and that the detection value at that time is the error factor detection value.

The reference value update section 1044 repeatedly updates the turning determination reference value E at a predetermined timing. For example, the number of plots of the detection values to be used in the calculation of the turning determination reference value E is defined in advance. If the number of plots reaches a number required for the calculation, the reference value update section 1044 calculates and updates the turning determination reference value E. After the turning determination reference value E is calculated, the reference value update section 1044 eliminates a part or all of the plots, which have been used in the calculation, and again plots the detection values. By repeating this operation, the turning determination reference value E is updated repeatedly. In this way, since the turning determination reference value E is corrected according to the state in which the vehicle 300 actually travels, it is possible to execute the auto-leveling control appropriate for a use state of the vehicle 300. Therefore, it is possible to improve the performance of the auto-leveling control.

Also, the threshold value adjustment section 1045 adjusts a magnitude of the turning determination threshold value in accordance with the speed or the acceleration of the vehicle 300. Usually, the higher the acceleration of the speed or the acceleration of the vehicle 300 is, the more an error in the detection value of the acceleration sensor 110, which is detected in the turning state of the vehicle 300, tends to increase. The controller 104 can receive the speed of the vehicle 300 form the vehicle speed sensor 312 and calculate the acceleration of the vehicle 300 based on the received vehicle speed.

Then, as shown in Figure 7A, if the vehicle speed is less than a predetermined value, the threshold value adjustment section 1045 sets the turning determination threshold value to the first turning determination threshold value E1. Also, if the vehicle speed is equal to or larger than the predetermined value, the threshold value adjustment section 1045 sets the turning determination threshold value to a second turning determination threshold value E2 which is smaller than the first turning determination threshold value E1.

Alternatively, as shown in Fig. 7B, if the acceleration (positive acceleration and negative acceleration) of the vehicle 300 is less than a predetermined value, the threshold value adjustment section 1045 sets the turning determination threshold value to the first turning determination threshold value E1. If the acceleration is equal or larger than the predetermined value, the threshold value adjustment section 1045 sets the turning determination threshold value to a third turning determination threshold value E3 which is smaller than the first turning determination threshold value E1. It is noted that the acceleration (motion acceleration vector a) of the vehicle 300 obtained from the vehicle speed is reflected to the acceleration, in the vehicle longitudinal direction, of detection value of the acceleration sensor 110. Therefore, if the component, in the vehicle longitudinal direction, of the detection value is less than a predetermined value X1, the threshold value adjustment section 1045 sets the turning determination threshold value to the first turning determination threshold value E1. If the component, in the vehicle longitudinal direction, of the detection value is equal to or larger than the predetermined value X1, the threshold value adjustment section 1045 sets the turning determination threshold value to the third turning determination threshold value E3.

In this way, by adjusting the turning determination threshold value according to the vehicle speed or the acceleration of the vehicle, it is possible to improve the accuracy of the estimation of the vehicle attitude angle θᵥ from the straight line obtained by plotting the detection values of the acceleration sensor 110. Therefore, the accuracy of the auto-leveling control can be further improved. Meanwhile, the first to third turning determination threshold values El, E2, E3 and the predetermined value X1 may be set appropriately based on a designer's experiment or a designer's simulation.

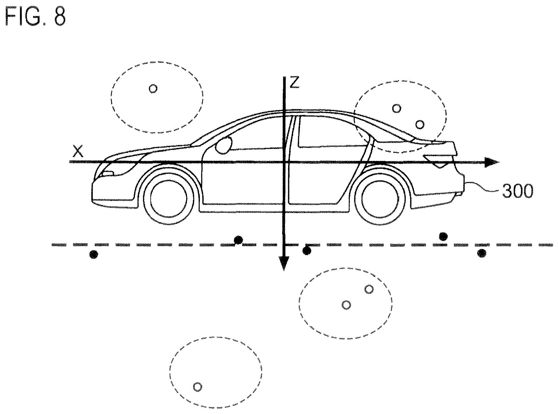

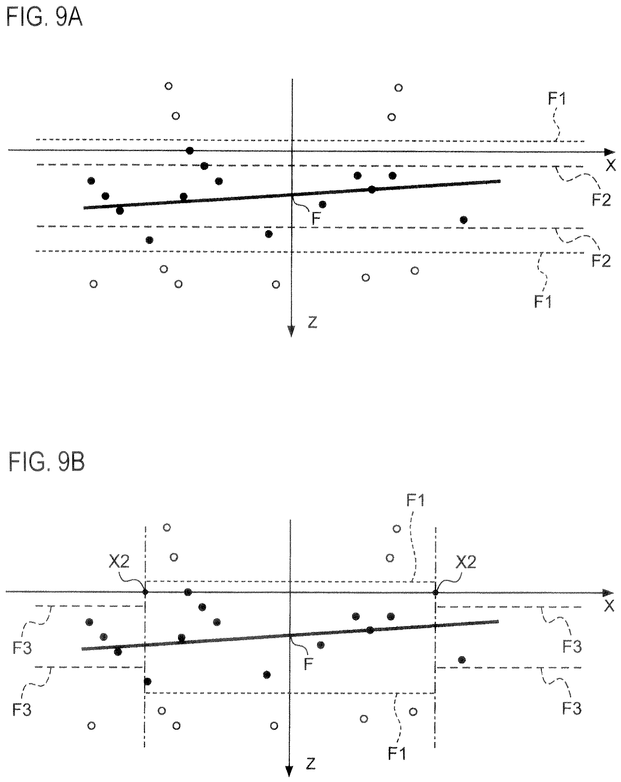

Also, examples of the predetermined traveling state, which lowers the accuracy of the estimation of the vehicle attitude angle θᵥ, include a predetermined rough road traveling state such as a state where the vehicle 300 is traveling on a bad road such as an unpaved road. Fig. 8 is a diagram for explaining detection values of the acceleration sensor 110 which are detected in the state where the vehicle is traveling on the rough road. Figs. 9A and 9B are diagrams for explaining the auto-leveling control in the case where a detection value(s) which are obtained when the vehicle is in the rough road traveling state are included in detection values to be used to derive the straight line. Fig. 8, Fig. 9A and Fig. 9B show a relationship between the acceleration in the vehicle longitudinal direction and the acceleration in the vehicle vertical direction. In Fig. 8, Fig. 9A and Fig. 9B, black circles indicate detection values of the acceleration sensor 110, which are used to derive the linear approximation formula, and white circles indicates detection values of the acceleration sensor 110, which are not used to derive the linear approximation formula.

As shown in Fig. 8, when the vehicle 300 is in the straight traveling state, the detection values (black circles), which are at a substantially equal distance from a plane perpendicular to the vehicle vertical axis (Z axis), are obtained. For example, when the vehicle 300 is in the straight traveling state, points obtained by projecting the detection values onto the Z-X plane are substantially equal in distance from the vehicle longitudinal axis (X axis). In contrast, when the vehicle 300 is in the rough road traveling state, like detection values in a region surrounded by dashed lines, the detected values (white circle) are obtained which are far in the vertical axis direction from a group of the detection values obtained in the straight traveling state. These detection values become the error factor detection values.

Then, as shown in Figs. 9A and 9B, the reference value update section 1044 derives a rough road traveling determination reference value F from the accelerations, in the vehicle vertical direction, of the plurality of detection values. For example, in the initialization process described above, the reference value update section 1044 derives an initial rough road traveling determination reference value F (Z = 0) from a plurality of detection values of the acceleration sensor 110, which are obtained when the vehicle 300 is traveling in the reference state. The rough road traveling determination reference value F is stored in the memory 108.

Also, in the state where the vehicle 300 is actually used, the reference value update section 1044 plots the detection values of the acceleration sensor 110 on the coordinate system in which the first axis (X axis) denotes the acceleration in the vehicle longitudinal direction and the second axis (Z axis) denotes the acceleration in the vehicle vertical direction. Then, the reference value update section 1044 calculates the rough road traveling determination reference value F from a group of the obtained detection values by using the moving average method or the least squares method. In the state where the vehicle 300 is actually used, the vehicle 300 is often in the straight traveling state. Therefore, by using a group of the certain number of detection values, the accelerations in the vehicle vertical direction, which are obtained when the vehicle 300 is in the straight traveling state, that is, the rough road traveling determination reference value F can be obtained. In the case where the least squares method is used as a method for calculating the rough road traveling determination reference value F, for example, the rough road traveling determination reference value F is set to a Z-intercept of the straight line obtained by the least squares method.

Then, if a difference between the acceleration, in the vehicle vertical direction, of the detection value of the acceleration sensor 110 and the rough road traveling determination reference value F exceeds a rough road traveling determination threshold value F1 (predetermined value), the detection value determination section 1043 determines that the vehicle 300 is in the predetermined rough road traveling state and that the detection value at that time is the error factor detection value.

The reference value update section 1044 repeatedly updates the rough road traveling determination reference value F at a predetermined timing. A method for updating the rough road traveling determination reference value F is similar to that for updating the turning determination reference value E. In this way, since the rough road traveling determination reference value F is corrected according to the traveling state of the actual vehicle 300, it is possible to execute the auto-leveling control appropriate for the use state of the vehicle 300. Therefore, it is possible to improve the performance of the auto-leveling control.

Also, the threshold value adjustment section 1045 adjusts a magnitude of the rough road traveling determination threshold value in accordance with the vehicle speed or the acceleration of the vehicle 300. Usually, the higher the vehicle speed or the acceleration of the vehicle 300 is, the more the error in the detection value of the acceleration sensor 110, which is detected when the vehicle 300 is in the rough road traveling state, tends to increase. The controller 104 can receive the speed of the vehicle 300 form the vehicle speed sensor 312 and calculate the acceleration of the vehicle 300 from the obtained vehicle speed.

Then, as shown in Figure 9A, if the vehicle speed is less than a predetermined value, the threshold value adjustment section 1045 sets the rough road traveling determination threshold value to the rough road traveling determination threshold value F1. Also, if the vehicle speed is equal to or larger than the predetermined value, the threshold value adjustment section 1045 sets the rough road traveling determination threshold value to a rough road traveling determination threshold value F2 which is smaller than the rough road traveling determination threshold value F1.

Alternatively, as shown in Fig. 9B, if the acceleration (positive acceleration and negative acceleration) of the vehicle 300 is less than a predetermined value, the threshold value adjustment section 1045 sets the rough road traveling determination threshold value to the rough road traveling determination threshold value F1. If the acceleration is equal to or larger than the predetermined value, the threshold value adjustment section 1045 sets the rough road traveling determination threshold value to a rough road traveling determination threshold value F3 which is smaller than the rough road traveling determination threshold value F1. It is noted that the acceleration (motion acceleration vector α) of the vehicle 300 obtained from the vehicle speed is reflected to the acceleration, in the vehicle longitudinal axis direction, of the detection value of the acceleration sensor 110. Therefore, if the component, in the vehicle longitudinal direction, of the detection value is less than a predetermined value X2, the threshold value adjustment section 1045 sets the rough road traveling determination threshold value to the rough road traveling determination threshold value F1. If when the component, in the vehicle longitudinal direction, of the detection value is equal or larger than the predetermined value X2, the threshold value adjustment section 1045 sets the rough road traveling determination threshold value to the rough road traveling determination threshold value F3.

In this way, by adjusting the rough road traveling determination threshold value according to the vehicle speed or the acceleration, it is possible to improve the accuracy of the estimation of the vehicle attitude angle θᵥ from the straight line obtained by plotting the detection values of the acceleration sensor 110. Therefore, the accuracy of the auto-leveling control can be further improved. Meanwhile, the rough road traveling determination threshold values F1, F2, F3 and the predetermined value X2 may be set appropriately based on a designer's experiment or a designer's simulation.

The rough road traveling determination reference value F may be set to an average value of the accelerations, in the vehicle vertical direction, of the plurality of detection values of the acceleration sensor 110.

Also, a first reference value Fa and a second reference value Fb may be calculated as the rough road traveling determination reference value F, and the error factor detection value may be determined based on a combination of the first reference value Fa and the second reference value Fb. For example, the first reference value Fa is calculated by the same method as the method for calculating the rough road traveling determination reference value F as described above. Also, a threshold value Fal corresponding to the first reference value Fa is set. The threshold value Fa1 is determined based on the vehicle attitude angles θᵥ that the vehicle can take during use. Specifically, the threshold value Fa1 is determined based on design values of the vehicle 300 including a maximum value of a vehicle height, a minimum value of the vehicle height, a range of movement of a suspension, a length of a wheelbase, and the like. That is, the threshold value Fa1 is determined based on a range of movement of the vehicle 300 that is determined a mechanical structure of the vehicle 300. Then, a first error factor detection value(s) are excluded from the detection values of the acceleration sensor 110 based on the first reference value Fa and the threshold value Fa1.

Subsequently, the second reference value Fb is calculated based on an average value of accelerations, in the vehicle vertical direction, of the detection values, which remain after the first error factor detection value(s) are excluded. Also, rough road traveling determination threshold values Fb1, Fb2, Fb3 corresponding to the rough road traveling determination threshold values F1, F2, F3 are set based on the second reference value Fb. Then, a second error factor detection value(s) are excluded based on the second reference value Fb and the rough road traveling determination threshold values Fb1 and Fb2 or the second reference value Fb and the rough road traveling determination threshold values Fb1 and Fb3, and a straight line is obtained based on the remaining detection values. In this manner, the detection values of the acceleration sensor 110 are screened by means of a combination of plural filters that are different from each other in time constant. Thereby, it is possible to further enhance an accuracy of estimation of the vehicle attitude angle θᵥ from the straight line obtained by plotting the detection values of the acceleration sensor 110.

Further, there may be a case where an output value of the acceleration sensor 110 changes due to a change in temperature of usage environment. Then, the straight line used to estimate the vehicle attitude angle θᵥ may be derived with the change in output value due to the change in temperature of the usage environment being taken into consideration. The acceleration sensor 110 detects the acceleration of gravity (1G). Normally, the magnitude of the acceleration of gravity is constant irrespective of an inclination of a road surface and an inclination of the vehicle 300. Then, the controller 104 grasps the change in the output value caused by the temperature change based on a change in magnitude of a detection value of the acceleration sensor 110 and corrects the detection value of the acceleration sensor by an amount of this change or a position(s) of an axis (axes) of the acceleration sensor by the amount of this change. For example, every time the vehicle 300 stops, a magnitude of the detection value of the acceleration sensor 110 (that is, a magnitude of the acceleration of gravity detected by the acceleration sensor 110) is calculated. Then, the detection values of the acceleration sensor 110 or the position(s) of the axis (axes) of the acceleration sensor 110 are corrected based on the magnitude of the detected acceleration of gravity or the change in magnitude of the detected acceleration of gravity. Thereby, it is possible to further enhance an accuracy of estimation of the vehicle attitude angle θᵥ from the straight line obtained by plotting the detection values of the acceleration sensor 110.

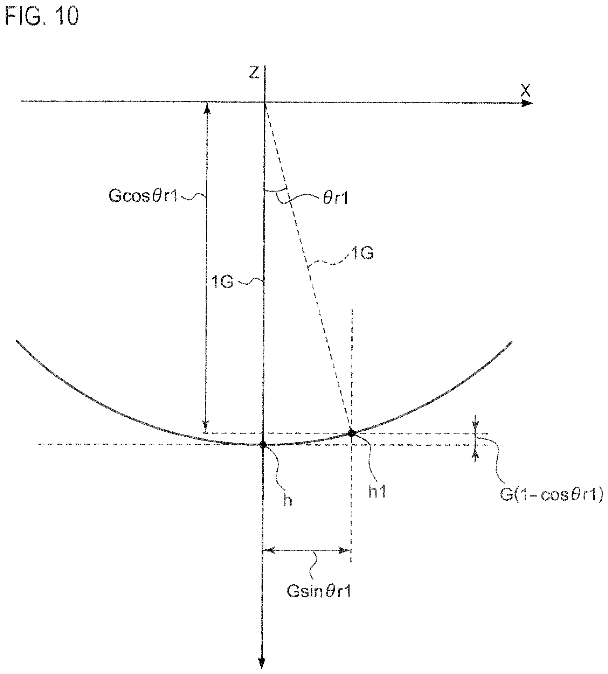

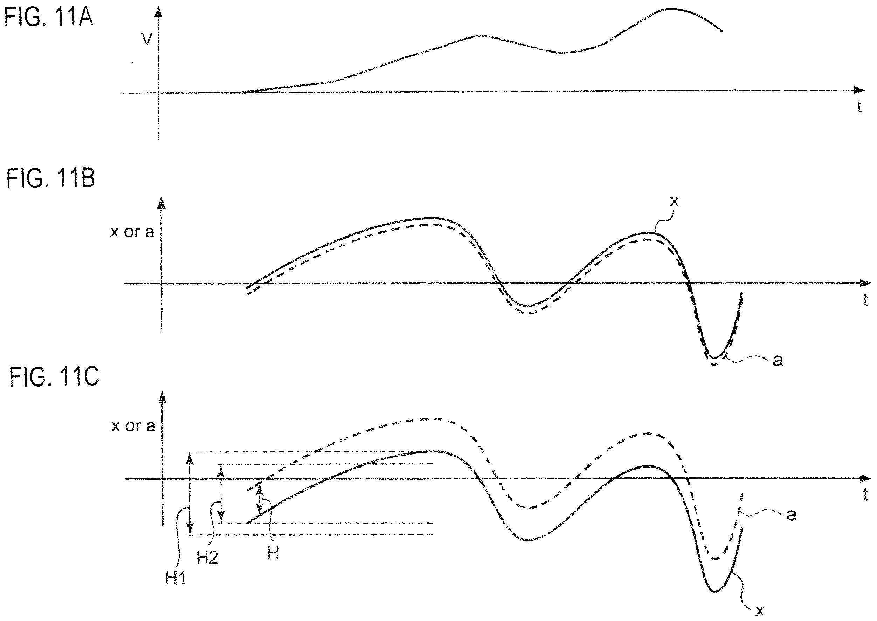

Also, examples of the predetermined traveling state, which lowers the accuracy of the estimation of the vehicle attitude angle θᵥ, include a predetermined slope traveling state. Fig. 10 is a diagram for explaining a change in the detection value of the acceleration sensor 110 according to an inclination angle of a road surface. Fig. 11A to Fig. 11C are diagrams for explaining an offset, which is caused by the inclination angle of the road surface, between detection values of the acceleration sensor 110 and accelerations which are obtained from vehicle speeds.

Fig. 11A is a time chart showing a change of the vehicle speed V with time. Fig. 11B is a time chart showing a change of a component (x component), in the vehicle longitudinal direction, of the detection value of the acceleration sensor 110 with time and a change of the acceleration "a" in the vehicle longitudinal axis direction, which is obtained by the calculation based on the vehicle speed, with time when the vehicle 300 is traveling on a horizontal road. Fig. 11C is a time chart showing a change of the x component with time and a change of the acceleration "a" with time when the vehicle 300 is traveling on a predetermined slope road. In Fig. 11A, the vertical axis indicates the vehicle speed. In Figs. 11B and 11C, the vertical axis indicates the x component or the acceleration "a". The horizontal axis in Figs. 11A to 11C indicates time t.

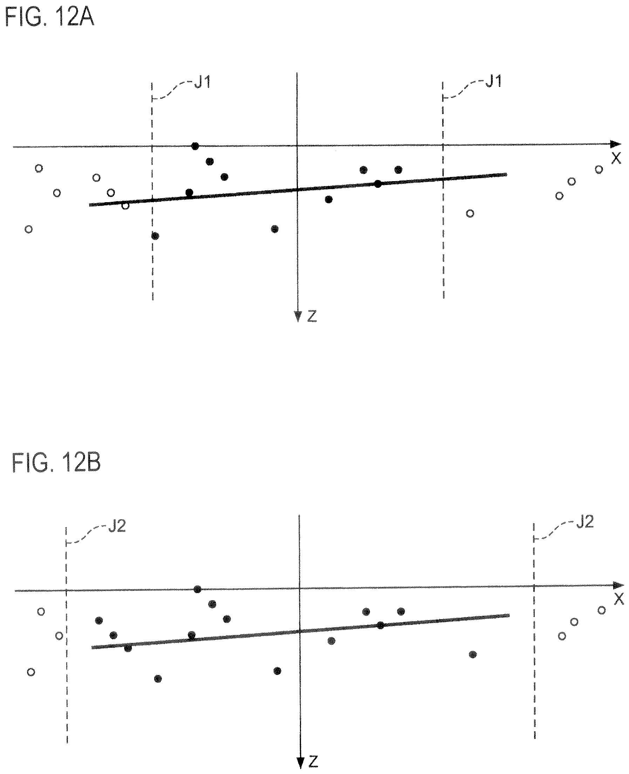

Figs. 12A and 12B are diagrams illustrating the auto-leveling control in the case where a detection value, which is obtained when the vehicle in the slope traveling state, is included in detection values to be used to derive a straight line. Figs. 10, 12A and 12B show a relationship between the acceleration in the vehicle longitudinal direction and the acceleration in the vehicle vertical direction. In Figs. 12A and 12B, black circles indicate the detection values of the acceleration sensor 110 which are used to derive the linear approximation formula, and white circles indicate the detection values of the acceleration sensor 110 which are not used to derive the linear approximation formula.

It is assumed that h denotes a detection value of the acceleration sensor 110 on the horizontal road surface, and h1 denotes a detection value of the acceleration sensor 110 on a road surface inclined by a road surface angle θᵣ₁. As shown in Fig. 10, the detection value h1 is offset by Gsinθᵣ₁ in the vehicle longitudinal axis direction with respect to the detection value h. Also, the detection value h1 is offset by G(1- cosθᵣ₁) in the vehicle vertical axis direction with respect to the detection value h.

Meanwhile, as described above, since the vehicle 300 is traveling parallel to the road surface, the motion acceleration vector α becomes a vector parallel to the road surface. Thus, the acceleration "a" in the vehicle longitudinal direction, which is obtained by the calculation based on the vehicle speed, is not changed depending on the road surface angle θᵣ. In the case where the road surface angle θᵣ is changed, while the acceleration "a" is not changed, the x component is changed. Therefore, if the road surface angle θᵣ is changed, an offset is generated between the x component and the acceleration "a." The larger the road surface angle θᵣ is, that is, the more sharply the road is inclined, the more an amount of offset increases.

For example, it is assumed that the vehicle speed V of the vehicle 300 is changed as shown in Fig. 11A. If the vehicle 300 is traveling on the horizontal road surface, the acceleration "a" and the x component almost coincide with each other as shown in Fig. 11B. On the other hand, if the vehicle 300 is traveling on a predetermined slope road, an offset is generated between the acceleration "a" and the x component as shown in Fig. 11C. As such, a detection value containing the x-component which is offset with respect to the acceleration "a" becomes the error factor detection value.

Then, if an acceleration difference H between the acceleration x, in the vehicle longitudinal direction, of the detection value of the acceleration sensor 110 and the acceleration "a" in the vehicle longitudinal direction which is calculated from the vehicle speed exceeds a predetermined slope traveling determination threshold value H1, the detection value determination section 1043 determines that the vehicle 300 is in the predetermined slope traveling state. Then, the detection value determination section 1043 determines that detection values, which are obtained during a period in which the vehicle 300 is determined to be in the predetermined slope traveling state, are the error factor detection values. For example, the detection value determination section 1043 may set a target to be compared with the slope traveling determination threshold value H1 to the acceleration difference H at an arbitrary timing during vehicle travel or an average value of the acceleration differences H for a predetermined period. The detection value determination section 1043 may maintain a result of the slope traveling determination until a next determination. That is, for example, if the vehicle 300 is determined to be in the slope traveling state, the detection value determination section 1043 determines that the vehicle 300 is in the slope traveling state until the next determination.

Also, based on magnitudes of accelerations in the vehicle longitudinal direction, the controller 104 selects as to whether or not detection values, which are obtained in a situation where the vehicle is determined not to be in the predetermined slope traveling state, should be used to derive a straight line. Also, the controller 104 provides different selection criteria according to the road surface angle θᵣ. That is, the threshold value setting section 1046 sets different threshold value for the acceleration in the vehicle longitudinal direction in accordance with a magnitude of the road surface angle θᵣ.

Specifically, if the acceleration difference H is equal to or less than the slope traveling determination threshold value H1 and exceeds a slope traveling determination threshold value H2 that is smaller the first slope traveling determination threshold value H1, that is, if a road surface on which the vehicle travels is relatively inclined, the threshold value setting section 1046 sets a threshold value in the vehicle longitudinal direction to a first acceleration threshold value J1 as shown in Fig. 12A. Then, the angle calculator 1041 derives a straight line by using, among the detection values of the acceleration sensor 110, detection values absolute value of accelerations, in the vehicle longitudinal direction, of which are equal to or less than the first acceleration threshold value J1. Also, if the acceleration difference H is equal to or less than the second slope traveling determination threshold value H2, that is, if the road surface is relatively horizontal, the threshold value setting section 1046 sets the threshold value in the vehicle longitudinal direction to a second acceleration threshold value J2 which is larger than the first acceleration threshold value J1, as shown in Fig. 12B. Then, the angle calculator 1041 derives a straight line by using detection values absolute values of accelerations in the vehicle longitudinal direction of which are equal to or less than the second acceleration threshold value J2.

That is, the detection value determination section 1043 excludes the detection values, which are obtained when the vehicle 300 is in the predetermined slope traveling state, from the detection values which are used to derive the straight line, irrespective of the magnitudes of the accelerations, in the vehicle longitudinal direction, of the detection values. Also, even if the road surface angle θᵣ is not so large that it is determined the vehicle is in the predetermined slope traveling state, with regard to the detection values which are obtained when the road surface angle θᵣ is relatively large within such a range, the detection value determination section 1043 uses the detection values, the absolute values of the accelerations in the vehicle longitudinal direction of which are relatively small, to derive the straight line. On the other hand, with regard to the detection values which are obtained when the road surface angle θᵣ is closer to a horizontal plane, the detection value determination section 1043 uses the detection value, the absolute values of the accelerations in the vehicle longitudinal direction of which are relatively large, as well as the detection values, the absolute values of the accelerations in the vehicle longitudinal direction of which are relatively small, to derive the straight line. That is, if the road surface angle θᵣ is large, a range from which the detection values which are used to derive the straight line are obtained is limited as compared with the case where the road surface angle θᵣ is small.

Thereby, it is possible to improve the accuracy of the estimation of the vehicle attitude angle θᵥ from the straight line obtained by plotting the detection values. It is noted that the first slope traveling determination threshold value H1, the second slope traveling determination threshold value H2, the first acceleration threshold value J1, and the second acceleration threshold value J2 may be set appropriately base on a designer's experiment or a designer's simulation. Also, these values are set in advance and stored in the memory 108.

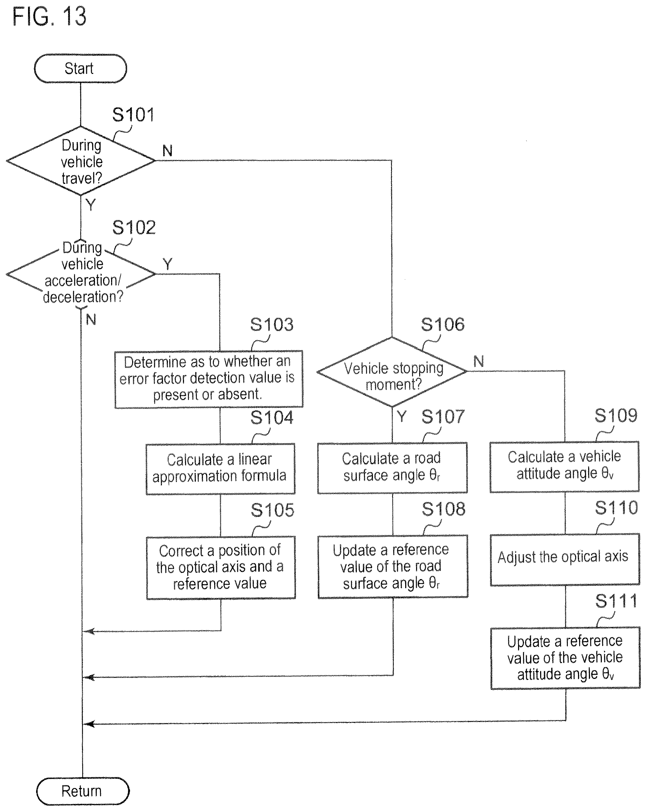

Fig. 13 is a flow chart showing the auto-leveling control executed by the control apparatus for the vehicle lamp according to the first embodiment. This flow is repeatedly executed at a predetermined timing by the controller 104 when the ignition is turned on, for example, in a state where an execution instruction of an auto leveling control mode is made by the light switch 304. Also, this flow is ended, for example, when the ignition is turned off.

At first, the controller 104 determines as to whether or not the vehicle is traveling (S101). If the vehicle is traveling (Yes at S101), the controller 104 determines as to whether or not the vehicle is accelerated/decelerated (S102). The acceleration and deceleration of the vehicle can be detected based on the detection value of the vehicle speed sensor 312, the detection value of the acceleration sensor 110, presence/absence of depression of a brake pedal (not shown), and/or presence/absence of depression of an accelerator pedal (not shown), etc. If the vehicle is accelerated or decelerated (No at S102), the controller 104 terminates this process. If the vehicle is accelerated or decelerated (Yes at S102), the controller 104 determines as to whether the error factor detection value(s) are present or absent as described above (S103). Subsequently, the controller 104 calculates a linear approximation formula from a plurality of detection values of the acceleration sensor 110 (S104). If it is determined that there is the error factor detection value(s), the controller 104 calculates the linear approximation formula with excluding the error factor detection value(s). Then, the controller 104 corrects the reference value of the vehicle attitude angle θᵥ and the optical axis angle θ_{O} by using the gradient of the obtained linear approximation formula (S105). And, the controller ends the process.

If the vehicle is not traveling (No at S101), the controller 104 determines as to whether or not it is the vehicle stopping moment (S106). If it is the vehicle stopping moment (Yes at S106), the controller 104 calculates the road surface angle θᵣ by subtracting the reference value of the vehicle attitude angle θᵥ from the current total angle θ (S107). Then, the controller 104 updates the reference value of the road surface angle θᵣ to be the calculated road surface angle θᵣ (S108) and ends this process.

If it is not the vehicle stopping moment (No at S106), this determination result means "during vehicle stop." Therefore, the controller 104 calculates the vehicle attitude angle θᵥ by subtracting the reference value of the road surface angle θᵣ from the current total angle θ (S109). Subsequently, the controller 104 adjusts the optical axis angle θ_{O} by using the calculated vehicle attitude angle θᵥ (S110). Then, the controller 104 updates the reference value of the vehicle attitude θᵥ to be the calculated vehicle attitude angle θᵥ (S111), and ends this process.

As described above, in the leveling ECU 100 serving as the control apparatus for the vehicle lamp according to this embodiment, the controller 104 plots the detection values of the acceleration sensor 110 on the coordinate system in which the first axis denotes the acceleration in the vehicle longitudinal direction and the second axis denotes the acceleration in the vehicle vertical direction, and derives the straight line from the plurality of thus plotted points. Then, the controller 104 outputs an adjustment signal to instruct the adjustment of the optical axis of the vehicle lamp based on the gradient of the straight line. Also, if the detection values to be used to derive the straight line include a detection value(s) which are obtained when the vehicle 300 is in the predetermined traveling state which lower the accuracy of the estimation of the vehicle attitude angle θᵥ from the gradient of a straight line, the controller 104 derives the straight line with excluding the detection values, which are obtained when the vehicle is in the predetermined traveling state, and.

That is, the controller 104 derives the straight line for estimating the vehicle attitude angle θᵥ, based on the detection values of the acceleration sensor 110, which are obtained in a state where the vehicle 300 travels straight on a flat horizontal road surface. Thereby, it is possible to improve the accuracy of the estimation of the vehicle attitude angle θᵥ from the straight line obtained by plotting the detection values. Therefore, it is possible to enhance the accuracy of the auto-leveling control using the acceleration sensor 110. Accordingly, higher performance of the auto-leveling control can be achieved.

The invention is not limited to the embodiments described above. Modifications such as various design change may be made in the invention based on knowledge of those skilled in the art. Embodiments obtained though such modifications are also included within the scope of the invention. New embodiment(s) obtaining by combining the above described embodiment(s) and the modification(s) have the effect of each of the combined embodiment(s) and the combined modification(s).

In the first embodiment, if the group of detection values to be used to derive the straight line includes the error factor detection value(s), the controller 104 derives the straight line with excluding the error factor detection value(s). However, the invention is not limited thereto. If the group includes the error factor detection value(s), the controller 104 may avoid the output of the adjustment signal or output a maintenance signal that instructs to maintain the position of the optical axis. In this case, it is possible to avoid an execution of the correction process which is expected to be low in accuracy. Therefore, it is possible to achieve higher performance of the auto-leveling control. When the controller 104 avoids the output of the adjustment signal, the controller 104 may avoid the output of the adjustment signal by causing the angle calculator 1041 not to derive the straight line, by causing the adjustment instruction section 1042 not to generate the adjustment signal, or by causing the adjustment instruction section 1042 not to output the adjustment signal after generating the adjustment signal.

In the first embodiment, examples of the predetermined traveling state of the vehicle 300, which lowers the accuracy of the estimation of the vehicle attitude angle θᵥ from the gradient of the straight line, include the turning state, the rough road traveling state, and the slope traveling state. And, the detection value determination section 1043 determines if the vehicle 300 is in any of these three traveling states. However, the determination of the traveling state of the vehicle 300 may be made with respect to at least one of the three traveling states. That is, the traveling state to which the determination made by the detection value determination section 1043 is directed may be only one of the three traveling states or a combination of any two thereof.

The reference value update section 1044 may repeatedly update, at the predetermined timing, only one of the turning determination reference value E and the rough road traveling determination reference value F. Also, the threshold value adjustment section 1045 may adjust the magnitude of only one of the turning determination reference value E and the rough road traveling determination reference value F according to the vehicle speed or the acceleration.

In the first embodiment, the detection value determination section 1043 determines as to whether or not the detection values to be used to derive the straight line include an error factor detection value(s). However, the invention is not limited thereto. The controller 104 may not be provided with the detection value determination section 1043. In this case, if at least one of a condition (i) that the difference between the detection value and the turning determination reference value E exceeds the turning determination threshold value, a condition (ii) that the difference between the detection value and the rough road traveling determination reference value F exceeds the rough road traveling determination threshold value, and a condition (iii) that the acceleration difference H exceeds the slope traveling determination threshold value is satisfied, the straight line may be derived without the detection value being included and the adjustment of the optical axis may be executed or the adjustment of the optical axis may be avoided (an output of the adjustment signal is avoided, the maintenance signal is output, etc.).

Any of (i) setting the reference value based on the average value of the detection values, (ii) using the plural reference values, and (iii) correcting the detection values in accordance with the temperature change, which are described in association with determination as to whether or not a vehicle is in the rough road traveling state may be employed in determination as to whether or not a vehicle is in the curving state and/or determination as to whether or not a vehicle is in the slope traveling state.

## Claims

1. A control apparatus (100) for a vehicle lamp (210), the control apparatus (100) comprising:
a receiver (102) adapted to receive a plurality of detection values of an acceleration sensor (110) from which accelerations in a vehicle longitudinal axis direction (X), accelerations in a vehicle lateral direction (Y) and accelerations in a vehicle vertical direction (Z) are derivable; and
a controller (104)
that is adapted to plot the plurality of detection values on a coordinate system in which a first axis
denotes the acceleration in the vehicle longitudinal direction (X) and a second axis
denotes the acceleration in the vehicle vertical direction (Z) during at least one of a vehicle acceleration and a vehicle deceleration,
that is adapted to derive a straight line from a plurality of plotted points, and
that is adapted to output an adjustment signal that instructs to adjust an optical axis (O) of the vehicle lamp (21) based on a vehicle attitude angle (θ_{V}), wherein
the control is adapted to estimate, from the gradient of the straight line, said vehicle attitude angle (θᵥ), which indicates an inclination angle of the vehicle (300) with respect to a road surface, and
wherein if a difference between acceleration, in the vehicle lateral direction (Y), of the detection value which is obtained when the vehicle (300) is in a traveling state and a turning determination reference value (E) derived from the accelerations, in the vehicle lateral direction (Y), of the plurality of detection values exceeds a predetermined turning determination threshold value (E1, E2, E3), the traveling state is detected to be a predetermined turning state that lowers the accuracy of the estimation of the vehicle attitude angle (θᵥ),
if a difference between the acceleration, in the vehicle vertical direction (Z), of the detection value which is obtained when the vehicle (300) is in a traveling state and a rough road traveling determination reference value (F) derived from the accelerations,
in the vehicle vertical direction (Z), of the plurality of detection values exceeds a predetermined rough road traveling determination threshold value (F1, F2, F3), the traveling state is detected to be a predetermined rough road traveling state that lowers the accuracy of the estimation of the vehicle attitude angle (θv), and
if an acceleration difference between acceleration, in the vehicle longitudinal direction (X), of the detection value which is obtained when the vehicle (300) is in a traveling state and acceleration, in the vehicle longitudinal direction (X), estimated from a vehicle speed exceeds a first slope traveling determination threshold value (H1), the traveling state is detected to be a predetermined slope traveling state that lowers the accuracy of the estimation of the vehicle attitude angle (θv),
wherein the controller is programmed in such a way that, when the controller detects that the vehicle is in a predetermined traveling state which is at least one of the predetermined turning state, the predetermined rough road state and the predetermined slope traveling state, the controller (104)
derives the straight line with excluding the detection value, which is obtained when the vehicle (300) is in the predetermined traveling state, and outputs the adjustment signal using the gradient of the straight line, or
avoids the output of the adjustment signal, or outputs the maintenance signal, which instructs to maintain the position of the optical axis (O),
wherein the controller (104) includes a reference value update section (1044), and the reference value update section (1044) repeatedly updates at least one of the turning determination reference value (E) and the rough road traveling determination reference value (F), at a predetermined timing, so as to correct said at least one of said reference values (E, F) according to the state in which the vehicle (300) actually travels.

2. The control apparatus according to claim 1, wherein
the controller (104) includes a threshold value adjustment section (1045),
the threshold value adjustment section (1045) adjusts a magnitude of at least one of the turning determination threshold value (E1, E2, E3) and the rough road traveling determination threshold value (F1, F2, F3) according to the vehicle speed or the acceleration of the vehicle (300).

3. The control apparatus according to claim 1 or 2, wherein
the controller (104) includes a threshold value setting section (1046) that sets a threshold value for the acceleration in the vehicle longitudinal direction (X),
if the acceleration difference is equal to or less than the first slope traveling determination threshold value (H1) and exceeds a second slope traveling determination threshold value (H2) which is less than the first slope traveling determination threshold value (H1), the threshold value setting section (1045) sets the threshold value for the acceleration in the vehicle longitudinal direction (X) to a first acceleration threshold value (J1) and the controller (104) derives the straight line using detection values absolute values of accelerations, in the vehicle longitudinal direction (X), of which are equal to or less than the first acceleration threshold value (H1), and
if the acceleration difference is equal to or less than the second slope traveling determination threshold value (H2), the threshold value setting section (1045) sets the threshold value for the acceleration in the vehicle longitudinal direction (X) to a second acceleration threshold value (J2) which is larger than the first acceleration threshold value (J1) and the controller (104) derives the straight line using detection values absolute values of accelerations, in the vehicle longitudinal direction (X), of which is equal to or less than the second acceleration threshold value (J2).

4. A vehicle lamp system comprising:
a vehicle lamp (210) including an adjustable optical axis;
an acceleration sensor (110); and
the control apparatus (100) according to any one of claims 1 to 3.

## Patentansprüche

1. Steuervorrichtung (100) für eine Fahrzeuglampe (210), wobei die Steuervorrichtung (100) umfasst:
einen Empfänger (102), der dazu eingerichtet ist, eine Vielzahl von Ermittlungswerten eines Beschleunigungssensors (110) zu empfangen, aus welchen Beschleunigungen in einer Längsachsenrichtung des Fahrzeugs (X), Beschleunigungen in einer lateralen Richtung (Y) des Fahrzeugs und Beschleunigungen in einer vertikalen Richtung (Z) des Fahrzeugs ableitbar sind; und
eine Steuerung (104),
die dazu eingerichtet ist, die Vielzahl von Ermittlungswerten auf einem Koordinatensystem, in dem eine erste Achse die Beschleunigung in der Längsrichtung (X) des Fahrzeugs kennzeichnet und eine zweite Achse die Beschleunigung in der vertikalen Richtung (Z) des Fahrzeugs kennzeichnet, während mindestens einem aus einer Fahrzeugbeschleunigung und einer Fahrzeugverlangsamung aufzuzeichnen,
die dazu eingerichtet ist, eine Gerade aus einer Vielzahl von aufgezeichneten Punkten abzuleiten, und
die dazu eingerichtet ist, ein Einstellungssignal auszugeben, das einen Befehl zum Einstellen einer optischen Achse (O) der Fahrzeuglampe (21) basierend auf einem Fahrzeuglagewinkel (θᵥ) gibt, wobei
die Steuerung dazu eingerichtet ist, aus dem Gradienten der Geraden den Fahrzeuglagewinkel (θᵥ) zu schätzen, der einen Neigungswinkel des Fahrzeugs (300) bezüglich einer Fahrbahn angibt, und wobei
wenn eine Differenz zwischen der Beschleunigung in der lateralen Richtung (Y) des Fahrzeugs des Ermittlungswertes, der erhalten wird, wenn sich das Fahrzeug (300) in einem Fahrzustand befindet, und einem Abbiegebestimmungsreferenzwert (E), der aus den Beschleunigungen in der lateralen Richtung (Y) des Fahrzeugs aus der Vielzahl von Ermittlungswerten abgeleitet wird, einen vorgegebenen Abbiegebestimmungsschwellenwert (E1, E2, E3) überschreitet, ermittelt wird, dass der Fahrzustand ein vorgegebener Abbiegezustand ist, der die Genauigkeit der Schätzung des Fahrzeuglagewinkels (θᵥ) herabsetzt,
wenn eine Differenz zwischen der Beschleunigung in der vertikalen Richtung (Z) des Fahrzeugs des Ermittlungswertes, der erhalten wird, wenn sich das Fahrzeug (300) in einem Fahrzustand befindet, und einem Bestimmungsreferenzwert für eine Fahrt auf rauer Straße (F), der aus den Beschleunigungen in der vertikalen Richtung (Z) des Fahrzeugs aus der Vielzahl von Ermittlungswerten abgeleitet wird, einen vorgegebenen Bestimmungsschwellenwert für eine Fahrt auf rauer Straße (S1, S2, S3) überschreitet, ermittelt wird, dass der Fahrzustand ein vorgegebener Fahrzustand auf rauer Straße ist, der die Genauigkeit der Schätzung des Fahrzeuglagewinkels (θᵥ) herabsetzt, und
wenn eine Beschleunigungsdifferenz zwischen der Beschleunigung in der Längsrichtung (X) des Fahrzeugs des Ermittlungswertes, der erhalten wird, wenn sich das Fahrzeug (300) in einem Fahrzustand befindet, und der Beschleunigung in der Längsrichtung (X) des Fahrzeugs, die anhand einer Fahrzeuggeschwindigkeit geschätzt wird, einen ersten Bestimmungsschwellenwert (H1) für eine Hangfahrt überschreitet, ermittelt wird, dass der Fahrzustand ein vorgegebener Hangfahrzustand ist, der die Genauigkeit der Schätzung des Fahrzeuglagewinkels (θᵥ) herabsetzt,
wobei die Steuerung so programmiert ist, dass, wenn die Steuerung ermittelt, dass sich das Fahrzeug in einem vorgegebenen Fahrzustand befindet, der mindestens einer aus dem vorgegebenen Abbiegezustand, dem vorgegebenen Fahrzustand auf rauer Straße und dem vorgegebenen Hangfahrzustand ist, die Steuerung (104)
die Gerade ableitet, wobei der Ermittlungswert ausgeschlossen wird, der erhalten wird, wenn sich das Fahrzeug (300) in dem vorgegebenen Fahrzustand befindet, und das Einstellungssignal unter Verwendung des Gradienten der Geraden ausgibt, oder
die Ausgabe des Einstellungssignals vermeidet, oder
das Beibehaltungssignal ausgibt, das den Befehl zum Beibehalten der Stellung der optischen Achse (O) gibt,
wobei die Steuerung (104) einen Referenzwertaktualisierungsabschnitt (1044) enthält, und
der Referenzwertaktualisierungsabschnitt (1044) wiederholt mindestens einen aus dem Abbiegebestimmungsreferenzwert (E) und dem Bestimmungsreferenzwert für eine Fahrt auf rauer Straße (F) zu einem vorgegebenen Zeitpunkt aktualisiert, um den mindestens einen der Referenzwerte (E, F) entsprechend dem Zustand zu korrigieren, in welchem das Fahrzeug (300) tatsächlich fährt.

2. Steuervorrichtung nach Anspruch 1, wobei
die Steuerung (104) einen Schwellenwerteinstellungsabschnitt (1045) enthält,
der Schwellenwerteinstellungsabschnitt (1045) eine Größe von mindestens einem aus dem Abbiegebestimmungsschwellenwert (E1, E2, E3) und dem Bestimmungsschwellenwert für eine Fahrt auf rauer Straße (F1, F2, F3) entsprechend der Fahrzeuggeschwindigkeit oder der Beschleunigung des Fahrzeugs (300) einstellt.

3. Steuervorrichtung nach Anspruch 1 oder 2, wobei
die Steuerung (104) einen Schwellenwertfestlegungsabschnitt (1046) enthält, der einen Schwellenwert für die Beschleunigung in der Längsrichtung (X) des Fahrzeugs festlegt,
wenn die Beschleunigungsdifferenz gleich oder kleiner ist als der erste Bestimmungsschwellenwert (H1) für eine Hangfahrt und einen zweiten Bestimmungsschwellenwert (H2) für eine Hangfahrt überschreitet, der kleiner ist als der erste Bestimmungsschwellenwert (H1) für eine Hangfahrt, der Schwellenwertfestlegungsabschnitt (1045) den Schwellenwert für die Beschleunigung in der Längsrichtung (X) des Fahrzeugs auf einen ersten Beschleunigungsschwellenwert (J1) festlegt und die Steuerung (104) die Gerade unter Verwendung der Ermittlungswerte absoluter Werte von Beschleunigungen in der Längsrichtung (X) des Fahrzeugs ableitet, die gleich oder kleiner als der erste Beschleunigungsschwellenwert (H1) sind, und
wenn die Beschleunigungsdifferenz gleich oder kleiner ist als der zweite Bestimmungsschwellenwert (H2) für eine Hangfahrt, der Schwellenwertfestlegungsabschnitt (1045) den Schwellenwert für die Beschleunigung in der Längsrichtung (X) des Fahrzeugs auf einen zweiten Beschleunigungsschwellenwert (J2) festlegt, der größer ist als der erste Beschleunigungsschwellenwert (J1) und die Steuerung (104) die Gerade unter Verwendung von Ermittlungswerten absoluter Werte von Beschleunigungen in der Längsrichtung (X) des Fahrzeugs ableitet, die gleich oder kleiner als der zweite Beschleunigungsschwellenwert (J2) sind.

4. Fahrzeuglampensystem, umfassend:
eine Fahrzeuglampe (210), die eine einstellbare optische Achse enthält;
einen Beschleunigungssensor (110); und
die Steuervorrichtung (100) nach einem der Ansprüche 1 bis 3.

## Revendications

1. Appareil de commande (100) pour un phare de véhicule (210), l'appareil de commande (100) comprenant :
un récepteur (102) adapté pour recevoir une pluralité de valeurs de détection d'un capteur d'accélération (110) à partir desquelles des accélérations dans une direction axiale longitudinale de véhicule (X), des accélérations dans une direction latérale de véhicule (Y) et des accélérations dans une direction verticale de véhicule (Z) peuvent être dérivées ; et
un dispositif de commande (104)
qui est adapté pour tracer la pluralité de valeurs de détection sur un système de coordonnées dans lequel un premier axe indique l'accélération dans la direction longitudinale de véhicule (X) et un second axe indique l'accélération dans la direction verticale de véhicule (Z) pendant au moins l'une parmi une accélération de véhicule et une décélération de véhicule,
qui est adapté pour dériver une ligne droite à partir d'une pluralité de points tracés, et
qui est adapté pour délivrer en sortie un signal d'ajustement qui ordonne d'ajuster un axe optique (O) du phare de véhicule (21) sur la base d'un angle d'assiette de véhicule (θv), dans lequel
la commande est adaptée pour estimer, à partir du gradient de la ligne droite, ledit angle d'assiette de véhicule (θv), qui indique un angle d'inclinaison du véhicule (300) par rapport à une surface de route, et
dans lequel si une différence entre l'accélération, dans la direction latérale de véhicule (Y), de la valeur de détection qui est obtenue lorsque le véhicule (300) est dans un état de déplacement, et une valeur de référence de détermination de virage (E) dérivée d'après les accélérations, dans la direction latérale de véhicule (Y), de la pluralité de valeurs de détection, dépasse une valeur de seuil de détermination de virage prédéterminée (E1, E2, E3), l'état de déplacement est détecté comme étant un état de virage prédéterminé qui abaisse la précision de l'estimation de l'angle d'assiette de véhicule (θv),
si une différence entre l'accélération, dans la direction verticale de véhicule (Z), de la valeur de détection qui est obtenue lorsque le véhicule (300) est dans un état de déplacement et une valeur de référence de détermination de déplacement sur route accidentée (F) dérivée d'après les accélérations, dans la direction verticale de véhicule (Z), de la pluralité de valeurs de détection, dépasse une valeur de seuil de détermination de déplacement sur route accidentée prédéterminée (F1, F2, F3), l'état de déplacement est détecté comme étant un état de déplacement sur route accidentée prédéterminé qui abaisse la précision de l'estimation de l'angle d'assiette de véhicule (θv), et
si une différence d'accélération entre une accélération, dans la direction longitudinale de véhicule (X), de la valeur de détection qui est obtenue lorsque le véhicule (300) est dans un état de déplacement et une accélération, dans la direction longitudinale de véhicule (X), estimée à partir d'une vitesse de véhicule, dépasse une première valeur de seuil de détermination de déplacement en pente (H1), l'état de déplacement est détecté comme étant un état de déplacement en pente prédéterminé qui abaisse la précision de l'estimation de l'angle d'assiette de véhicule (θv),
dans lequel le dispositif de commande est programmé de telle sorte que, lorsque le dispositif de commande détecte que le véhicule est dans un état de déplacement prédéterminé qui est au moins l'un parmi l'état de virage prédéterminé, l'état de route accidentée prédéterminé et l'état de déplacement en pente prédéterminé, le dispositif de commande (104)
dérive la ligne droite en excluant la valeur de détection, qui est obtenue lorsque le véhicule (300) est dans l'état de déplacement prédéterminé, et délivre en sortie le signal d'ajustement en utilisant le gradient de la ligne droite, ou
élude la sortie du signal d'ajustement, ou
délivre en sortie le signal de maintenance, qui ordonne de maintenir la position de l'axe optique (O),
dans lequel le dispositif de commande (104) comprend une section de mise à jour de valeur de référence (1044), et la section de mise à jour de valeur de référence (1044) met à jour de manière répétée au moins l'une parmi la valeur de référence de détermination de virage (E) et la valeur de référence de détermination de déplacement sur route accidentée (F), à un cadencement prédéterminé, de manière à corriger ladite au moins une desdites valeurs de référence (E, F) en fonction de l'état dans lequel le véhicule (300) se déplace réellement.

2. Appareil de commande selon la revendication 1, dans lequel le dispositif de commande (104) comprend une section d'ajustement de valeur de seuil (1045),
la section d'ajustement de valeur de seuil (1045) ajuste une grandeur d'au moins l'une parmi la valeur de seuil de détermination de virage (E1, E2, E3) et la valeur de seuil de détermination de déplacement sur route accidentée (F1, F2, F3) en fonction de la vitesse de véhicule ou de l'accélération du véhicule (300).

3. Appareil de commande selon la revendication 1 ou 2, dans lequel le dispositif de commande (104) comprend une section d'établissement de valeur de seuil (1046) qui établit une valeur de seuil pour l'accélération dans la direction longitudinale de véhicule (X),
si la différence d'accélération est égale ou inférieure à la première valeur de seuil de détermination de déplacement en pente (H1) et dépasse une seconde valeur de seuil de détermination de déplacement en pente (H2) qui est inférieure à la première valeur de seuil de détermination de déplacement en pente (H1), la section d'établissement de valeur de seuil (1045) établit la valeur de seuil pour l'accélération dans la direction longitudinale de véhicule (X) à une première valeur de seuil d'accélération (J1) et le dispositif de commande (104) dérive la ligne droite en utilisant des valeurs absolues de valeurs de détection d'accélérations, dans la direction longitudinale de véhicule (X), qui sont égales ou inférieures à la première valeur de seuil d'accélération (H1), et
si la différence d'accélération est égale ou inférieure à la seconde valeur de seuil de détermination de déplacement en pente (H2), la section d'établissement de valeur de seuil (1045) établit la valeur de seuil pour l'accélération dans la direction longitudinale de véhicule (X) à une seconde valeur de seuil d'accélération (J2) qui est supérieure à la première valeur de seuil d'accélération (J1) et le dispositif de commande (104) dérive la ligne droite en utilisant des valeurs absolues de valeurs de détection d'accélérations, dans la direction longitudinale de véhicule (X), qui sont égales ou inférieures à la seconde valeur de seuil d'accélération (J2).

4. Système de phare de véhicule comprenant :
un phare de véhicule (210) comprenant un axe optique ajustable ;
un capteur d'accélération (110) ; et
l'appareil de commande (100) selon l'une quelconque des revendications 1 à 3.
